# EUROPÄISCHE PATENTSCHRIFT

(11) **EP 2 995 540 B1**
(45) Veröffentlichungstag und Bekanntmachung des Hinweises auf die Patenterteilung: **02.01.2019**
(21) Anmeldenummer: 15184024.6
(22) Anmeldetag: 07.09.2015
(51) Int. Cl.: B62K 3/00, A61G 5/04

(54) **ELEKTRONISCH SELBSTBALANCIERTER ROLLSTUHL**
ELECTRONICALLY SELF-BALANCED WHEELCHAIR
FAUTEUIL ROULANT A AUTO-EQUILIBRAGE ELECTRONIQUE

(30) Priorität: 15.09.2014 DE 102014113278
(43) Veröffentlichungstag der Anmeldung: 16.03.2016
(73) Patentinhaber: Freee Mobility GmbH, 73660 Urbach (DE)
(72) Erfinder: FRIED, Andreas, 71334 Waiblingen (DE)
(74) Vertreter: Würmser, Julian

(56) Entgegenhaltungen:
- EP-A1- 0 806 929
- EP-A1- 2 606 867
- US-A- 5 701 965
- US-A- 6 062 600
- US-A1- 2006 243 499

## Beschreibung

Die Erfindung betrifft ein Stützsystem für einen elektronisch selbstbalancierten Rollstuhl nach Anspruch 1, einen elektronisch selbstbalancierten Rollstuhl nach Anspruch 7 sowie ein Verfahren zum Steuern eines Stützsystems für einen elektronisch selbstbalancierten Rollstuhl nach Anspruch 13.

Selbstbalancierte Rollstühle sind beispielsweise aus EP 2 606 867 A1 oder WO 2011/103362 A1 bekannt. Derartige elektronisch selbstbalancierte Rollstühle basieren auf dem Prinzip eines elektronisch selbstbalancierten Fahrzeuges (Segway ®), wie in EP 1 181 187 B1 beschrieben. Hinsichtlich der Struktur und Funktion von derartigen selbstbalancierten Fahrzeugen wird auf EP 1 181 187 B1 verwiesen.

Aus WO 2011/103362 A1 ist ein selbstbalancierter Rollstuhl bekannt, bei dem zwei Stützen mit Stützrädern vorgesehen sind, um zu verhindern, dass der Rollstuhl im ausgeschalteten Zustand umkippt. Die Stützen sind schwenkbar gelagert und können während der Fahrt nach oben geschwenkt werden.

Auf ähnliche Weise offenbart EP 2 606 867 A1 Stützvorrichtungen, die verhindern sollen, dass der Rollstuhl im ausgeschalteten Zustand umkippt. Dazu sind mindestens zwei Stützvorrichtungen vorgesehen, die hinsichtlich ihrer Position so eingestellt werden können, dass ein gewisser Ausgleich bei einem schrägen oder unebenen Untergrund ermöglicht wird. Bei dieser mechanisch aufwendigen Lösung im Stand der Technik wird der Ausgleich einer Hangneigung oder eines unebenen Untergrundes als verbesserungswürdig angesehen. Dabei ist besonders bedeutsam, dass eine unsymmetrische Abstützung dahingehend problematisch ist, dass selbstbalancierte Fahrzeuge üblicherweise hinsichtlich ihrer Beschleunigung bzw. Abbremsung über eine Neigung nach vorne oder hinten gesteuert werden. Der nächstliegende bekanntgewordene Stand der Technik ist der US5701965 zu entnehmen.

Der Erfindung liegt die Aufgabe zugrunde, einen elektronisch selbstbalancierten Rollstuhl oder ein Stützsystem für einen elektronisch selbstbalancierten Rollstuhl oder ein Verfahren zum Steuern eines Stützsystems für einen elektronisch selbstbalancierten Rollstuhl vorzuschlagen, wobei die Funktionssicherheit und der Komfort beim Abschalten bzw. Abstellen des Rollstuhls verbessert sein soll, speziell für körperlich beeinträchtigte Personen. Insbesondere soll eine Hangneigung oder ein unebener Untergrund beim Abstützen besonders genau ausgeglichen werden können. Damit soll sicher verhindert werden, dass durch eine Neigung des Rollstuhls eine unerwünschte Beschleunigung stattfindet. Diese Aufgabe wird durch ein Stützsystem nach Anspruch 1, einen Rollstuhl nach Anspruch 7 sowie ein Verfahren nach Anspruch 13 gelöst.

Die Aufgabe wird insbesondere gelöst durch ein Stützsystem für einen elektronisch selbstbalancierten Rollstuhl mit mindestens einem Rad, vorzugsweise mindestens zwei Rädern, umfassend mindestens eine Stützeinrichtung sowie mindestens einen Linearantrieb, wobei die Stützeinrichtung über den Linearantrieb bewegbar ist, wobei ein Sensor zur Bestimmung einer Kontaktierung der Stützeinrichtung mit dem Untergrund vorgesehen ist.

Ein Kerngedanke der Erfindung liegt darin, einen Sensor vorzusehen, über den feststellbar ist, wann die Stützeinrichtung an dem Untergrund anschlägt. Dadurch wird es ermöglicht, dass der Linearantrieb bei Kontaktieren mit dem Untergrund gestoppt werden kann (über eine entsprechende Steuerungseinrichtung). Damit kann eine genaue Ausrichtung des Rollstuhls ermöglicht und verhindert werden, dass der Rollstuhl beim "Parkversuch" sich nach vorne oder nach hinten neigt und damit eine unerwünschte und zudem sehr gefährliche Beschleunigung erfolgt. Die Position der Stützeinrichtung kann also vergleichsweise genau eingestellt werden.

Unter einem "elektronisch selbstbalancierten Rollstuhl" soll insbesondere ein "Segway"®-Rollstuhl verstanden werden. Der Rollstuhl soll also eine elektronische Steuerung sowie Ausgleichselemente aufweisen, um den Rollstuhl auszubalancieren, so dass er nicht umkippt. Der Rollstuhl ist andererseits auch so ausgebildet, dass ein Kippen (zumindest wenn keine Stützeinrichtung in einer entsprechenden Stützposition ist) nicht verhindert werden kann, wenn die elektronische Selbstbalancierung ausgeschaltet ist. Details der Funktion des elektronisch selbstbalancierten Rollstuhls können WO 2011/103362 A1, EP 2 606 867 A1 und insbesondere EP 1 181 187 B1 entnommen werden. In konkreten Ausführungsformen sind nur ein oder nur zwei Räder des Rollstuhls während der Fahrt in Kontakt mit dem Boden.

Bei der "Stützeinrichtung" handelt es sich um eine Einrichtung, die geeignet ist, den Rollstuhl zumindest anteilig zu tragen. Die Stützeinrichtung kann einen schwenkbaren und/oder verfahrbaren Fuß bzw. eine schwenkbare und/oder verfahrbare Stütz aufweisen, so dass ein unebener Untergrund ausgeglichen werden kann.

In einer bevorzugten Ausführungsform umfasst das Stützsystem mindestens zwei Stützeinrichtungen (mit je mindestens einem zugeordneten Linearantrieb). Bei zwei solchen Stützeinrichtungen in Kombination mit dem Sensor zur Bestimmung der Kontaktierung kann eine Ausgleichung von Unebenheiten oder Neigungen besonders exakt stattfinden.

In einer Weiterbildung ist ein Gehäuse, insbesondere für die Aufnahme der Stützeinrichtung und/oder den Linearantrieb derart beweglich, insbesondere federnd gelagert, dass die Kontaktierung mit dem Untergrund zu einer Verlagerung des Gehäuses führt. Vorzugsweise ist ein Kontaktsensor (z. B. Kippschalter, Endschalter) vorgesehen, um die Verlagerung des Gehäuses zu bestimmen.

Der Sensor zur Bestimmung der Kontaktierung mit dem Untergrund kann im Allgemeinen am Gehäuse oder an einem bodenseitigen Ende der Stützeinrichtung angeordnet sein. Der Sensor zur Bestimmung der Kontaktierung mit dem Untergrund kann ein Abstandsmessradar umfassen und/oder eine Kamera.

Durch eine derartige Ausbildung kann die Kontaktierung mit dem Untergrund auf besonders einfache Weise und zuverlässig festgestellt werden.

In einer bevorzugten Ausführungsform weist das Stützsystem eine Messeinrichtung, insbesondere umfassend ein Potentiometer, auf, um eine Relativposition der Stützeinrichtung gegenüber einem Fahrgestell des Rollstuhls und/oder dem Untergrund zu bestimmen. Über eine derartige Messeinrichtung kann das Verfahren der Stützeinrichtung besonders genau und an die äußeren Umstände angepasst durchgeführt werden.

In einer konkreten Ausführungsform weist die Stützeinrichtung eine Steuereinrichtung, z. B. Mikrocontroller, auf. Die Steuereinrichtung ist vorzugsweise separat ausgebildet, kann jedoch auch Bestandteil der Steuereinrichtung des Rollstuhls sein (also Bestandteil derjenigen Steuereinrichtung, über die beispielsweise Beschleunigung oder Abbremsung oder Lenkung des Fahrzeugs erfolgt). In einer konkreten Ausführungsform ist die Steuereinrichtung so ausgebildet, dass der Linearantrieb mit Energie versorgt wird, bis die (eine erste) Kontaktierung mit dem Untergrund (Boden) festgestellt wird. Alternativ oder zusätzlich kann die Steuereinrichtung so ausgebildet sein, dass die Stützeinrichtung nach einer (ersten) Kontaktierung mit dem Untergrund um einen vorbestimmten Weg wieder zurück bewegt (angehoben) wird. Vorzugsweise erfolgt dieses Zurückbewegen nach der Feststellung der (ersten) Kontaktierung und zwar unmittelbar danach (ggf. nachdem die Stützeinrichtung nach Abschalten des Motors aufgrund eines Nachlaufs des Linearantriebs noch um eine bestimmte Wegstrecke weiterbewegt worden ist). Das Durchführen der ersten Kontaktierung (ggf. mit Nachlauf) und das darauf folgende Anheben (beispielsweise unmittelbar nach Beendigung des Nachlaufs) sind vorzugsweise lediglich vorbereitende Maßnahmen, um die Stützeinrichtung zu positionieren.

Im Allgemeinen kann die Steuereinrichtung so ausgebildet sein, dass der Linearantrieb derart betätigt werden kann, dass die Bewegung der Stützeinrichtung erst nach Zurücklegen eines vorbestimmten Weges nach der Kontaktierung zum Stillstand kommt. Dadurch wird gewährleistet, dass die Stützeinrichtung in der endgültigen Position unterhalb des mindestens einen Rades liegt oder dass das mindestens eine Rad zumindest entlastet wird. Dadurch wird die Zuverlässigkeit der Abstützung und die Sicherheit der Parkposition weiter verbessert.

Besonders bevorzugt erfolgt die (erstmalige) Kontaktierung mit dem Boden (ggf. einschl. Nachlauf) für mindestens zwei Stützeinrichtungen. Die jeweilige (erste) Kontaktierung kann dabei zu verschiedenen Zeiten erfolgen (was beispielsweise dann der Fall sein kann, wenn der Untergrund uneben ist oder schief). Jeder zugeordnete Linearantrieb kann bei Feststellung der Kontaktierung mit dem Boden abgeschaltet werden. Die Position der Stützeinrichtung bei Herstellung der Kontaktierung kann gespeichert werden. Nach einer ersten Kontaktierung mit dem Boden könnte aufgrund des Nachlaufs einer der Stützen das balancierte Fahrzeug aus der waagerechten Position gedrückt werden. Dies wiederum würde das selbstbalancierte Fahrzeug (Segway ®) zu einer Vorwärts- oder Rückwärts-Beschleunigung veranlassen. Aus diesem Grund ist es bevorzugt, wenn nach dieser (ersten) Kontaktierung nochmals ein Anheben stattfindet und zwar um einen bestimmten Weg (der vorzugsweise bei den beiden Stützeinrichtungen identisch ist) gegenüber einem zuvor festgestellten Ort der Kontaktierung. Wenn dann die Balancierung des Rollstuhls ausgeschaltet wird und gleichzeitig die Stützeinrichtungen (aus dann gleicher Höhe über dem Untergrund) nach unten in Richtung Untergrund gefahren werden, findet eine symmetrische Abstützung statt (da nicht die eine Stützeinrichtung vor der anderen kontaktiert). Wenn dann noch dafür gesorgt wird, dass die Stützeinrichtungen nicht nur bis zur Kontaktierung gefahren werden, sondern etwas darüber hinaus, wird gleichzeitig mindestens ein Rad angehoben oder entlastet, was eine effektive bzw. zuverlässige Abstützung ermöglicht.

In einer Ausführungsform ist eine/die (erste) Steuereinrichtung dazu ausgebildet, die Kontaktierung der Stützeinrichtung mit dem Untergrund zu erfassen und die Stützeinrichtung aktiv zu bremsen. Dies führt dazu, dass die Stützeinrichtung mit hoher Geschwindigkeit gefahren werden kann, wobei ein störendes Nachlaufen vermieden oder zumindest reduziert wird. Wie bereits beschrieben, kann dieser Nachlauf das selbstbalancierte Fahrzeug (Segway ®-Rollstuhl) zu einer Vorwärts- oder Rückwärts-Beschleunigung veranlassen.

Ein aktives Bremsen kann mittels eines beliebigen Aktuators erfolgen. Vorzugsweise wird der Antrieb, insbesondere der Linearantrieb, der Stützeinrichtung dazu genutzt, um diese aktiv zu bremsen. Bei der Verwendung eines Elektroantriebs für die Stützeinrichtung kann eine Gegenstrombremsung, Nutzbremsung oder Gleichstrombremsung erfolgen. Die Gegenstrombremsung wird auf Grund des geringen Schaltungsaufwands bevorzugt.

In einer Ausführungsform wird das aktive Bremsen, vorzugsweise in Form einer Gegenstrombremsung, mit dem beschriebenen kurzfristigen Anheben der Stützeinrichtung kombiniert. Die (erste) Steuereinrichtung ist zur Implementierung einer entsprechenden Steuerstrategie ausgebildet.

Die oben genannte Aufgabe wird weiterhin gelöst durch einen elektronisch selbstbalancierten Rollstuhl ("Segway"®-Rollstuhl), umfassend ein Stützsystem der oben beschriebenen Art.

Vorzugsweise umfasst der Rollstuhl mindestens zwei Stützeinrichtungen. Weiter vorzugsweise sind die beiden Stützeinrichtungen an (nur) einer Seite (links oder rechts) des Rollstuhls vorgesehen. Alternativ kann eine erste Stützeinrichtung an einer Seite und eine zweite Stützeinrichtung an einer anderen Seite, insbesondere diagonal gegenüberliegend, angeordnet sein. Unter einer "Seite" des Rollstuhls sollen diejenigen Abschnitte verstanden werden, die weder nach vorne oder nach hinten weisen, sondern senkrecht auf eine vorbestimmte Fahrtrichtung des Rollstuhls ausgerichtet sind. In einer konkreten Ausführungsform sind beide Stützeinrichtungen relativ nahe an einem von (beispielsweise zwei) Rädern angeordnet, beispielsweise in einer Entfernung von weniger als 20 cm. In jedem Fall kann durch zwei Stützeinrichtungen eine "3-Punkt-Auflage" realisiert werden und zwar zwischen den beiden Stützeinrichtungen und einem der Räder (Reifen), beispielsweise zwischen zwei Stützeinrichtungen, die auf der einen Seite vorgesehen sind und dem gegenüberliegenden Rad (Reifen) - das also auf der anderen Seite vorgesehen ist. Dadurch wird die Zuverlässigkeit und Sicherheit der Positionierung des Rollstuhls weiter verbessert.

Vorzugsweise ist eine/die erste Steuerungseinrichtung, z. B. Microcontroller, zur Steuerung zumindest der mindestens einen Stützeinrichtung und eine zweite Steuerungseinrichtung, z. B. Microcontroller, zur Steuerung von Fahrmanövern vorgesehen. Weiter vorzugsweise kommuniziert die erste Steuereinrichtung mit der zweiten Steuereinrichtung über zumindest ein Paar von einem Aktuator und einem Sensor. Der Aktuator kann eine Druckbeaufschlagungseinrichtung, insbesondere umfassend einen (bi-stabiler) Hubmagneten, oder ein Lichtsender sein. Der Sensor kann ein Drucksensor oder ein Lichtsensor sein. Gemäß einem allgemeinen Gedanken werden bestehende Sensoren/Aktuatoren eines üblichen selbstbalancierten Fahrzeugs genutzt, um Steuersignale von der ersten Steuereinrichtung auf die zweite Steuereinrichtung (und umgekehrt) zu übertragen. Dadurch kann ein übliches selbstbalanciertes Fahrzeug auf einfache Art und Wiese in einen selbstbalancierten Rollstuhl umgewandelt werden.
Es können mehrere Hubmagneten, beispielsweise mindestens zwei oder mindestens vier, vorhanden sein.

Vorzugsweise umfasst der Rollstuhl eine Fahrt-Messeinrichtung zur Bestimmung, ob der elektronisch selbstbalancierte Rollstuhl fährt. Die Fahrt-Messeinrichtung umfasst vorzugsweise eine Lochscheibe oder Zahnscheibe und/oder einen mit der Lochscheibe zusammenwirkenden Hallsensor. Dadurch kann verhindert werden, dass die Stützeinrichtung bei sich bewegenden Rollstuhl nach unten gefahren wird, so dass Unfälle vermieden werden können.

Weiterhin kann eine Geländeneigungs-Messeinrichtung vorgesehen sein, um eine Geländeneigung, z. B. am Berg, festzustellen. Dadurch können von einer Steuerungseinrichtung Maßnahmen ergriffen werden, um die Geländeneigung auszugleichen.

Weiterhin kann mindestens ein Fahrererkennungs-Sensor, vorgesehen sein, so dass bei der Steuerung entsprechend berücksichtigt werden kann, wenn der Fahrer noch im Rollstuhl sitzt (bzw. nicht mehr im Rollstuhl sitzt). Vorzugsweise ist der Fahrererkennungs-Sensor in eine Sitzeinrichtung des Rollstuhls integriert. Beispielsweise kann unter einem Sitzkissen ein Blech angeordnet sein, dass beim Hinsetzten des Fahrers einen oder mehrere Schalter betätigt.

Der Fahrererkennungs-Sensor ist vorzugsweise mit der (ersten) Steuereinrichtung kommunikativ, insbesondere über Drähte, verbunden. Sobald die erste Steuereinrichtung erfasst, dass sich der Fahrer hingesetzt hat, kann sie dies an die zweite Steuereinrichtung, beispielsweise mittels des genannten bi-stabilen Magneten, die an Drucksensoren der zweiten Steuereinrichtung anliegen, kommunizieren. Diese Information kann die zweite Steuereinrichtung nutzen um einen Modus zu aktivieren, der den Rollstuhl in einem balancierten Zustand hält und ein Vor- und/oder Rückwärtsfahren ermöglicht.

Die oben genannte Aufgabe wird weiterhin gelöst durch ein Verfahren zum Steuern eines Stützsystems, insbesondere der oben beschriebenen Art, vorzugsweise für einen elektronisch selbstbalancierten Rollstuhl der oben beschriebenen Art, gekennzeichnet durch die Schritte:
- Bereitstellen einer Stützeinrichtung;
- Antreiben der Stützeinrichtung über einen Linearantrieb; und
- Feststellen der Kontaktierung der Stützeinrichtung mit dem Untergrund.

Daraus resultieren die Vorteile, wie bereits im Zusammenhang mit dem Stützsystem sowie dem elektronisch selbstbalancierten Rollstuhl beschrieben. Insbesondere kann eine zuverlässige und sichere Abstützung des Rollstuhls realisiert werden.

Nach dem Feststellen der Kontaktierung (oder zu dem Zeitpunkt der Feststellung der Kontaktierung) mit dem Untergrund wird der Linearantrieb ausgeschaltet, kann jedoch ggf. um einen Nachlauf weiterlaufen.

Vorzugsweise wird die Stützeinrichtung nach einer ersten Kontaktierung wieder angehoben ("gelüftet").

Die Stützeinrichtung kann (insbesondere nach dem Anheben) derart in Richtung Untergrund bewegt werden, dass sie nach der Kontaktierung noch um eine vorbestimmte Strecke weiterbewegt wird (so dass zumindest ein Rad des Rollstuhls angehoben wird oder zumindest entlastet wird).

Das erfindungsgemäße Verfahren kann ein aktives Bremsen der Stützeinrichtung nach der Detektion der Kontaktierung umfassen. Das aktive Bremsen kann die Aktivierung eines Aktuators umfassen. Beispielsweise kann der Linearantrieb zur Gegenstrombremsung verwendet werden.

Der Linearantrieb umfasst vorzugsweise einen (elektrischen) Motor, z. B. Linearmotor. Der Rollstuhl kann eine Eingabe und/oder Anzeigevorrichtung, z. B. ein Display (Touchscreen) aufweisen. Der Linearantrieb (Linearmotor) kann mit Gleichstrom betrieben werden. Generell kann eine Kraftübertragung hydraulisch und/oder mechanisch, z. B. über eine Zahnstange, erfolgen. Der Linearantrieb wird vorzugsweise durch einen Mikrocontroller gesteuert.

Ein maximal möglicher Verfahrweg der Stützeinrichtung kann mindestens 150 mm oder mindestens 100 mm und/oder höchstens 300 mm oder höchstens 200 mm, z. B. 150 mm betragen. Vorzugsweise wird nur dann ein Fahrbetrieb des Rollstuhls freigegeben, wenn festgestellt wird, dass die Stützeinrichtungen maximal angehoben sind. Für den Fall, dass die Stütze maximal (in Richtung Untergrund) ausgefahren wird, kann ggf. ein Warnmechanismus integriert sein. In einem solchen Fall könnte der Sensor zur Feststellung einer Kontaktierung mit dem Boden nicht funktioniert haben oder die Stützeinrichtung ins "Leere", wie beispielsweise in einen Schachtdeckel oder Loch oder bei Schräglagen, z.B. am Berg, die durch den Verfahrweg der Stützen nicht ausgeglichen werden können etc. gefahren sein. In einem solchen Verfahren kann beispielsweise die Steuerung des Abstützens zum Parken unterbrochen werden. Im Allgemeinen erfolgt die Messung und das Anfahren von verschiedenen Punkten (z. B. Kontakt mit dem Boden, Beendigung eines Nachlaufs bzw. Nachlaufstrecke, Anheben der Stützeinrichtung, Andrücken u. s. w.) wegabhängig. Dadurch kann ein feinfühliges Herantasten zweier unabhängiger Stützeinrichtungen an den Boden bei unbekanntem Weg ermöglicht werden, ohne die Gleichgewichtsregelung des elektronisch selbstbalancierten Rollstuhls ("Segway"®-Rollstuhls) zu beeinflussen.

Gemäß einem unabhängigen Aspekt der Erfindung wird ein Umrüstsatz für einen Rollstuhl der oben beschriebenen Art vorgeschlagen, umfassend ein Stützsystem, insbesondere nach der oben beschriebenen Art, eine erste Steuereinrichtung zur Steuerung der Stützeinrichtung, und mindestens einen Aktuator bzw. Sensor, wobei die erste Steuereinrichtung vorzugsweise so ausgebildet ist, dass sie über den Aktuator bzw. Sensor des Umrüstsatzes und einen korrespondierenden Aktuator bzw. Sensor eines selbstbalancierten Fahrzeugs mit einer am selbstbalancierten Fahrzeug vorgesehenen zweiten Steuereinrichtung zur Steuerung von Fahrmanövern kommunizieren kann. Der Aktuator kann eine Druckbeaufschlagungseinrichtung, insbesondere umfassend einen (bi-stabilen) Magneten, oder ein Lichtsender sein. Der Sensor kann ein Drucksensor oder ein Lichtsensor sein.

Gemäß einem weiteren unabhängigen Aspekt der Erfindung wird ein Umrüstsatz für einen Rollstuhl vorgeschlagen, wobei der Umrüstsatz ein elektrisch betätigbares Stützsystem eine erste Steuereinrichtung sowie mindestens einen Aktuator umfasst. Die erste Steuereinrichtung kann dazu ausgebildet sein, die Stützeinrichtung zu steuern. Der Aktuator ist derart ausgebildet und an dem Umrüstsatz angeordnet, dass er mit einem an einem selbstbalancierten Fahrzeug angeordneten Sensor so interagieren kann, dass hierdurch Steuerbefehle an eine zweite Steuereinrichtung des selbstbalancierten Fahrzeugs weitergegeben werden. Bei dem Aktuator des Umrüstsatzes kann es sich um eine Druckbeaufschlagungseinrichtung, beispielsweise einen bistabilen Magneten handeln, der je nach Zustand Druck auf den Sensor des selbstbalanciereten Fahrzeugs ausübt. In Abhängigkeit von dem beaufschlagten Druck kann die zweite Steuereinrichtung unterschiedliche Modi des selbstbalancierten Fahrzeugs aktivieren. Beispielsweise kann zwischen einem selbstbalancierenden Zustand und einem nicht-selbstbalancierenden Zustand (das selbstbalancierte Fahrzeug ist ausgeschaltet) gewechselt werden.

In einer Ausführungsform umfasst der Umrüstsatz Sensoren zur Aufnahme von Signalen, die seitens der zweiten Steuereinrichtung abgegeben werden. Bei den Signalen kann es sich beispielsweise um Lichtsignale handeln, die vorzugsweise über eine oder mehrere Lichtquellen (z.B. eine LED) abgegeben werden. Die erste Steuereinrichtung kann diese Signale mittels der Sensoren empfangen und auswerten, um festzustellen, in was für einem Zustand sich das selbstbalancierte Fahrzeug befindet. Erfindungsgemäß kann die erste Steuereinrichtung auf diese Signale durch eine geänderte Steuerstrategie reagieren.

In einer (weiteren) Ausführungsform umfasst der Umrüstsatz Eingabemittel, um Steuerbefehle von einem Benutzer zu empfangen und seitens der ersten Steuereinrichtung zu verarbeiten. Diese Steuerbefehle können dazu führen, dass mittels des Aktuators des Umrüstsatzes entsprechende oder abgewandelte Steuerbefehle an die zweite Steuereinrichtung weitergegeben werden. Beispielsweise kann ein behindertengerecht angeordneter Schalter vorgesehen sein, um das selbstbalancierte Fahrzeug einzuschalten.

In einer (weiteren) Ausführungsform umfasst der Umrüstsatz Anzeigemittel zur Anzeige von Fahrzeugzuständen. Diese Anzeigemittel werden von der ersten Steuereinrichtung gesteuert, wobei eine Steuerung in Abhängigkeit von Signalen, die von dem selbstbalancierten Fahrzeug ausgesandt werden, erfolgen kann.

In einer (weiteren) Ausführungsform aktiviert und/oder deaktiviert die erste Steuerung unterschiedliche Modi des selbstbalancierten Fahrzeugs in Abhängigkeit von mindestens einer Position einer Stützeinrichtung des Stützsystems. Beispielsweise kann das selbstbalancierte Fahrzeug dann abgeschaltet werden, wenn Stützeinrichtungen des Stützsystems festen Kontakt mit dem Boden haben. Der Umrüstsatz kann Detektionsmittel umfassen, um diesen Zustand zu detektieren.

Einem allgemeinen Gedanken dieser Erfindung entsprechend werden bestehende Sensoren/Aktuatoren eines üblichen selbstbalancierten Fahrzeugs genutzt, um Steuersignale von der ersten Steuereinrichtung auf die zweite Steuereinrichtung (und umgekehrt) zu übertragen. Dadurch kann ein übliches selbstbalanciertes Fahrzeug auf einfache Art und Weise in einen selbstbalancierten Rollstuhl umgewandelt werden.

Gemäß einem (unabhängigen) Aspekt der Erfindung muss die Kontaktierung der Stützeinrichtung(en) mit dem Untergrund nicht zwangsweise mechanisch bestimmt werden. Vielmehr kann der Sensor dazu ausgebildet sein, zu ermitteln, ob eine entsprechende Kontaktierung (wahrscheinlich) vorliegt.

Der Sensor kann also beispielsweise dazu ausgebildet sein, eine Distanz bis zum Untergrund zu ermitteln. Beispielsweise kann der Sensor diese Distanz mittels Lichtwellen, Schall und/oder elektromagnetischer Wellen bestimmen.

Erfindungsgemäß kann also für eine und/oder für mehrere Stützeinrichtungen getrennt voneinander die jeweilige Distanz ermittelt werden, die die Stützeinrichtung zurücklegen muss, bis eine Kontaktierung mit dem Untergrund zustande kommen wird. Die Stützeinrichtungen können dann in Abhängigkeit von der ermittelten Distanz so ausgefahren werden, dass diese im Wesentlichen gleichzeitig den Untergrund kontaktieren oder unmittelbar vor einer Kontaktierung gestoppt werden.

Durch diese Maßnahme kann ein Kippen und somit ein Beschleunigen des selbstbalancierten Rollstuhls beim Ausfahren der Stützeinrichtungen vermieden werden, so dass ein sicheres Parken gewährleistet ist.

Weitere vorteilhafte Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

### Hierbei zeigen:

- Fig. 1: eine Ansicht eines erfindungsgemäßen Rollstuhls von hinten in einer ersten Stellung;
- Fig. 2: den Rollstuhl gem. Fig. 1 in einer zweiten Stellung;
- Fig. 3: den Rollstuhl gem. Fig. 1 ohne Abdeckung;
- Fig. 4: den Rollstuhl gem. Fig. 2 ohne Abdeckung;
- Fig. 5: eine Seitenansicht des Rollstuhls gem. Fig. 1 ohne Abdeckung;
- Fig. 6: eine Seitenansicht des Rollstuhls gem. Fig. 2 ohne Abdeckung;
- Fig. 7: ein Chassis des Rollstuhls gem. Fig. 1;
- Fig. 8: ein Chassis des Rollstuhls gem. Fig. 2;
- Fig. 9: Stützeinrichtungen in der Position des Rollstuhls gem. Fig. 1;
- Fig. 10: Stützeinrichtungen in der Position des Rollstuhls gem. Fig. 2;
- Fig. 11: ein Schema für einen Verfahrweg einer ersten Stütz-einrichtung;
und
- Fig. 12: ein Schema für einen Verfahrweg einer zweiten Stütz-einrichtung.

In der nachfolgenden Beschreibung und in den Zeichnungen werden für gleiche und gleichwirkende Teile dieselben Bezugszeichen verwendet.

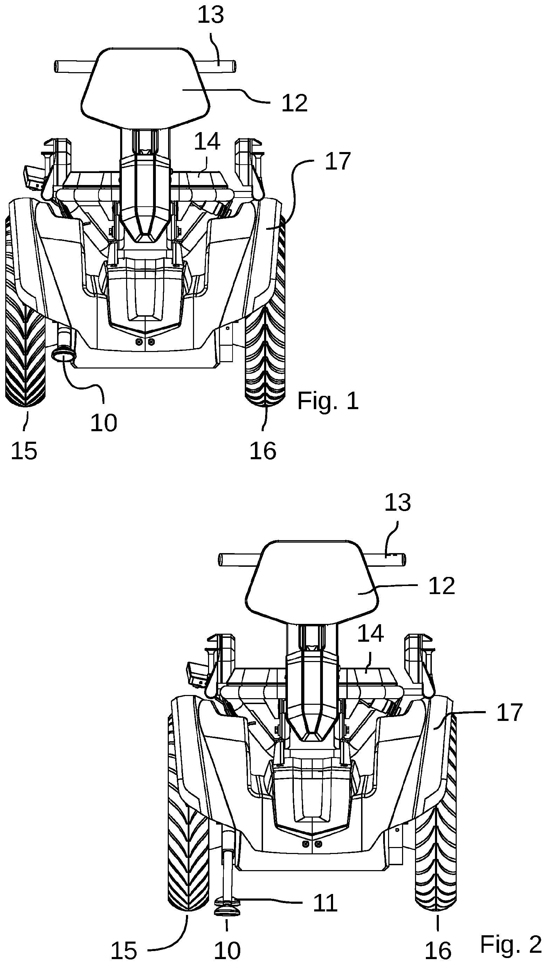

Fig. 1 zeigt einen erfindungsgemäßen Rollstuhl in einer Ansicht von hinten, wobei eine erste Stützeinrichtung 10 und eine zweite Stützeinrichtung 11 (in Fig. 2 zu sehen) vorgesehen sind. In der Position gem. Fig. 1 sind die Stützeinrichtungen 10, 11 in einer ersten Position, in der sie maximal eingefahren sind, so dass der Rollstuhl fortbewegt werden könnte. Fig. 2 zeigt demgegenüber eine Stellung der Stützeinrichtungen 10, 11 in der diese ausgefahren sind, so dass der Rollstuhl in einer Parkposition abgestützt wird. Weiterhin ist in den Fig. 1 und 2 eine Rückenlehne 12 und eine Lenkung 13 erkennbar, über die der Rollstuhl bedient werden kann. Eine Sitzfläche ist mit dem Bezugszeichen 14 gekennzeichnet. Weiterhin ist ein erstes Rad 15 sowie ein zweites Rad 16 vorgesehen. Während der Fahrt ist der Rollstuhl ausschließlich über diese Räder in Kontakt mit dem Boden, so dass er eigentlich umkippen würde. Um dies zu verhindern, umfasst der Rollstuhl in bekannter Weise eine elektronische Selbstbalancierung, die verhindert, dass der Rollstuhl umkippen kann.

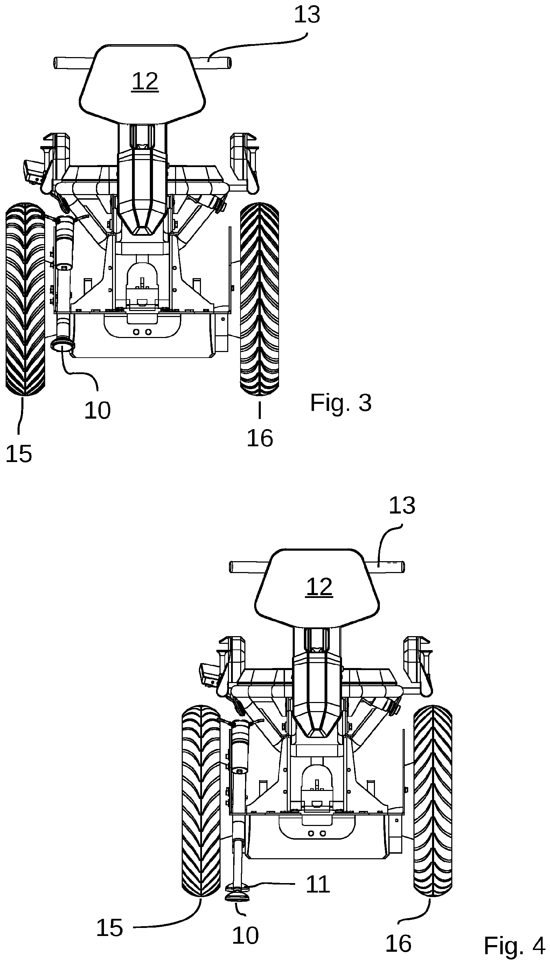

Die Fig. 3 und 4 entsprechen den Fig. 1 und 2, wobei jedoch eine Abdeckung 17 weggelassen wurde, so dass ein Inneres des Rollstuhls, insbesondere die Stützeinrichtungen 10, 11 besser erkennbar sind. Die Stützeinrichtungen umfassen vorzugsweise einen (zylindrischen) Schaft und ein den Schaft verbreiterndes Fußelement zum Aufsetzen auf dem Untergrund.

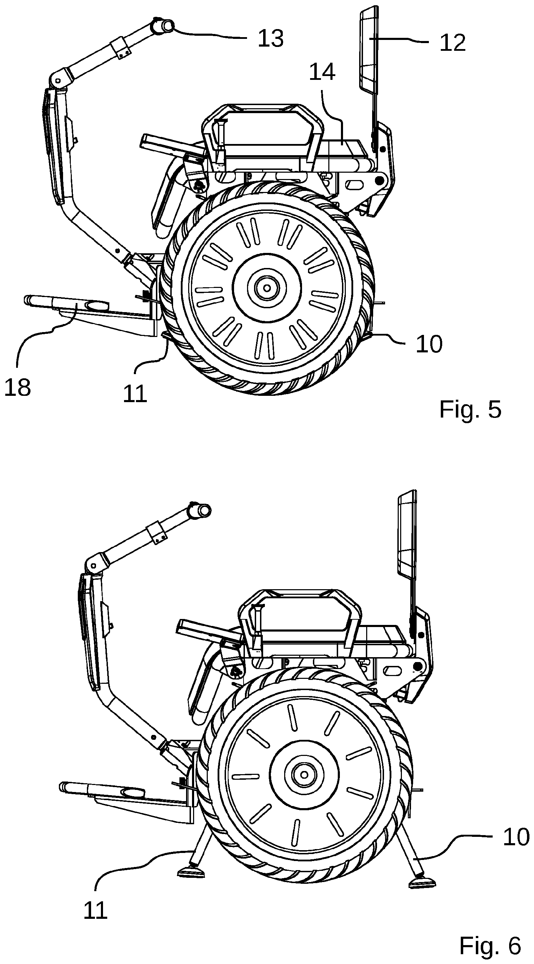

Fig. 5 und 6 zeigen entsprechende Seitenansichten, wobei in der Fig. 5 die Stützeinrichtungen 10, 11 maximal angehoben sind und in der Fig. 6 die Stützeinrichtungen so ausgefahren sind, dass der Rollstuhl auf einem (nicht gezeigten) Untergrund abgestützt wird. Weiterhin ist in den Fig. 5 und 6 ein Fußbereich 18 erkennbar, um die Füße des Rollstuhlfahrers aufzunehmen.

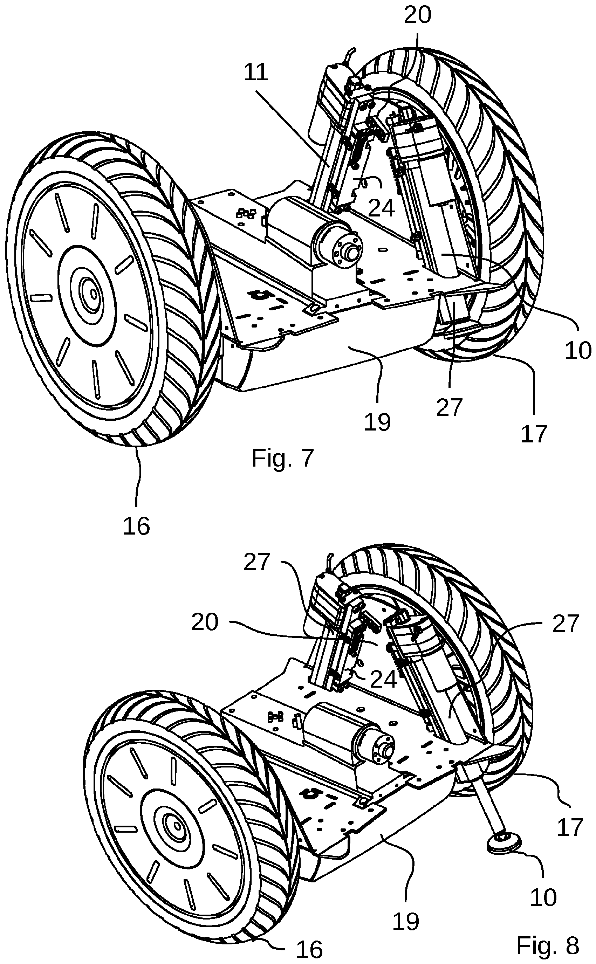

In den Fig. 7 und 8 ist ein Chassis 19 vergrößert dargestellt, wobei wiederum in Fig. 7 die Stützeinrichtungen 10, 11 in einer angehobenen Position dargestellt sind und in Fig. 8 in einer ausgefahrenen Position, so dass der Rollstuhl auf einem Boden (nicht gezeigt) abgestützt wird. Die Stützeinrichtungen 10, 11 sind in je einem Gehäuse 27 teleskopartig aufgenommen.

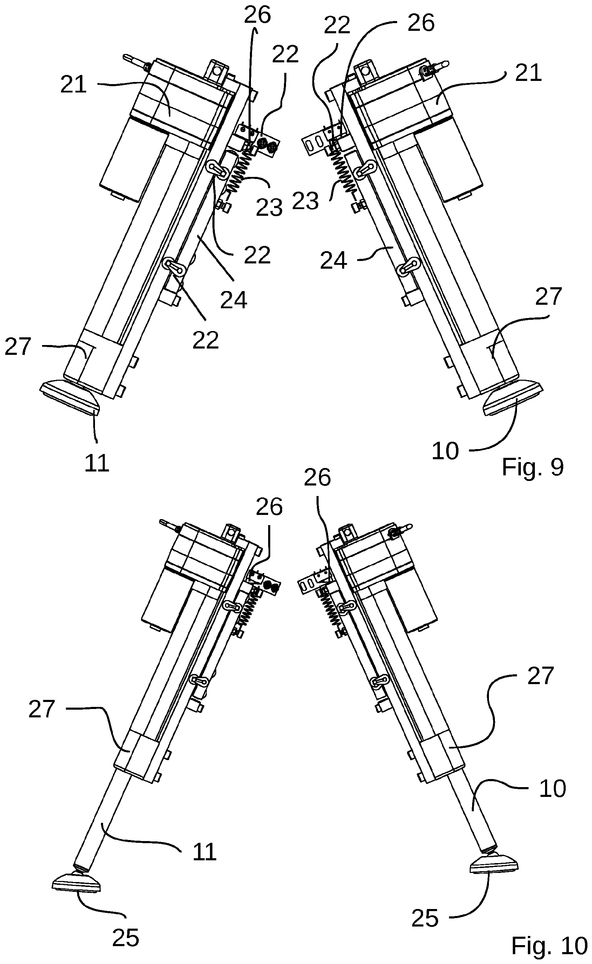

Im Detail sind die Stützeinrichtungen 10, 11 einschl. zugeordneter Linearantriebe und Gehäuse in den Fig. 9 und 10 dargestellt.

Je ein nicht im Detail dargestellter Linearmotor 21 treibt die erste Stützeinrichtung 10 bzw. die zweite Stützeinrichtung 11 an, so dass diese in die in Fig. 10 gezeigte Position nach unten gefahren werden können. Über verschwenkbare Befestigungseinrichtungen 22 sowie eine Feder 23 ist das Gehäuse 27 an einer Strebe 24 befestigt, die wiederum (s. Fig. 7 und 8) am Fahrgestell 20 befestigt ist (bzw. starr mit diesem verbunden ist).

Aufgrund der schwenkbaren Befestigungseinrichtungen 22 und der Feder 23 kann die jeweilige Stützeinrichtung 10 bzw. 11 gegenüber dem Fahrgestell 20 bewegt werden, so dass eine Kontaktierung mit einem Boden (in der Stellung gem. Fig. 10) dazu führt, dass das Gehäuse 27 beim Anstoßen von Fußteilen 25 gegenüber dem Fahrgestell angehoben wird (kurzzeitig), so dass Kontaktschalter 26 bewegt bzw. betätigt werden. Dadurch kann die exakte Position der Kontaktierung mit dem Boden erfasst werden. Um die Stützeinrichtungen 10, 11 zu verlagern, sind diese teleskopartig innerhalb des Gehäuses 27 aufgenommen, so dass sie ausgefahren werden könnten (s. Fig. 10). Einerseits ist also das Gehäuse 27 (geringfügig) gegenüber dem Fahrgestell 20 verschiebbar, so dass eine Kontaktierung bzw. ein Anstoßen an einem Untergrund festgestellt werden kann, andererseits sind die Stützeinrichtungen 10, 11 innerhalb des Gehäuses 27 verschiebbar, so dass eine Anpassung an den Untergrund zur Abstützung erfolgen kann. Ein maximaler Verschiebeweg des Gehäuses 27 gegenüber dem Fahrgestell 20 kann beispielsweise 1 bis 5 mm betragen. Ein maximaler Verschiebeweg der Stützeinrichtungen 10, 11 innerhalb des jeweiligen Gehäuses 27 kann beispielsweise 50 mm bis 300 mm, insbesondere 150 mm betragen.

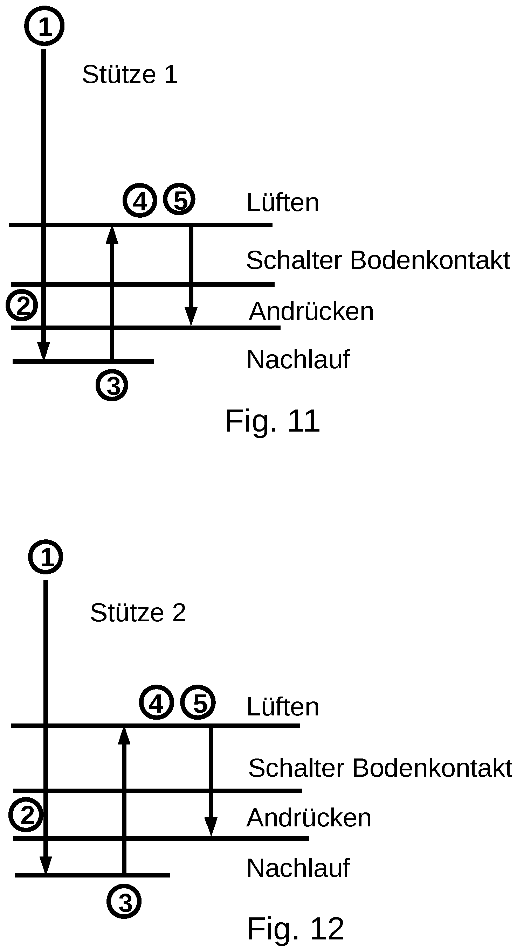

Die Einstellung der Abstützung wird in den Fig. 11 und 12 anhand von zwei Diagrammen beschrieben. Fig. 11 illustriert eine Verfahrbewegung der ersten Stützeinrichtung 10. Fig. 12 illustriert eine Verfahrbewegung der zweiten Stützeinrichtung 12.

Am jeweiligen "Punkt 1" befinden sich die Stützeinrichtungen in einer Position gem. Fig. 1 bzw. 9. Zur Realisierung der Abstützung werden die Stützeinrichtungen 10, 11 nach unten gefahren bis ein Kontakt mit dem Boden festgestellt wird ("Punkt 2"). Bei Erreichen des Bodens wird der Linearmotor abgeschaltet. Die aktuelle Position der Stützeinrichtung gegenüber dem Fahrgestell 20 wird dabei gespeichert.

Aufgrund eines Nachlaufes des Linearmotors kommt die Stütze erst bei "Punkt 3" zum Stehen. Dadurch bedingt erfolgt in Folge des Nachlaufs ein leichtes unerwünschtes Anheben des/der Räder bzw. des Rollstuhls. Um diesen Effekt zu reversieren, wird die jeweilige Stützeinrichtung 10, 11 in eine "Lüftposition" gefahren ("Punkt 4"). Die Entfernung zwischen Punkt 4 ("Lüftposition") und dem Boden ist in Fig. 11 und 12 gleich (obwohl der Verfahrweg insgesamt unterschiedlich ist). Die Verfahrensschritte bis zum Erreichen der Lüftposition ("Punkt 4") sind in den Fig. 11 und 12 identisch, müssen jedoch nicht gleichzeitig durchgeführt werden (können beispielsweise nacheinander durchgeführt werden).

Die nun folgenden Verfahrensschritte erfolgen jedoch vorzugsweise gleichzeitig. Nach Erreichen der Lüftposition ("Punkt 4") werden die Stützeinrichtungen 10, 11 wieder nach unten gefahren (symbolisiert durch Punkt "5"). Vor dem nach Untenfahren kann die Selbstbalancierung des Rollstuhls ausgeschaltet werden. Aufgrund des Lüftens (leichtes Anheben) wird eine Beeinflussung durch eine der Stützeinrichtungen 10, 11 aufgrund einer verschiedenen Höhe gegenüber dem Untergrund vermieden. In jedem Fall fahren beide Stützeinrichtungen gleichzeitig einen definierten Weg zum "Andrücken". Das bedeutet, die Stützeinrichtungen 10, 11 fahren nicht nur bis sie den Boden berühren, sondern noch weiter, so dass der Rollstuhl von den Stützeinrichtungen leicht angehoben wird. Ein Rad, an dem die Stützeinrichtung 10, 11 vorgesehen sind, wird also leicht angehoben bzw. zumindest entlastet. Wenn man das Fahrgestell als Bezugssystem herannimmt, ist die "Andrückposition" also unterhalb der eigentlichen "Bodenposition". Insgesamt wird der Rollstuhl auf der Seite der Stützeinrichtungen 10, 11 angehoben und das Rad (der Reifen) an dieser Stelle entlastet. Man erhält eine sichere 3-Punkt-Auflage mit den beiden Stützeinrichtungen und dem gegenüberliegenden Rad (Reifen).

Gemäß einem (unabhängigen) Aspekt der Erfindung wird ein Umrüstsatz zur Umrüstung eines selbstbalancierten Fahrzeugs für den Stehbetrieb vorgesehen. Dieser Umrüstsatz kann die erfindungsgemäße Stützeinrichtung 10, 11 aufweisen. Vorzugsweise ist eine erste Steuereinrichtung als Teil des Umrüstsatzes vorgesehen, die drahtlos mit einer zweiten Steuereinrichtung des selbstbalancierten Fahrzeugs kommuniziert.

Das umzurüstende selbstbalancierte Fahrzeug für stehende Fahrer kann über zwei Schnittstellen verfügen, um zwischen Fahrer und Fahrzeug zu kommunizieren:
- Anzeigeschnittstelle: Auf der Mittelkonsole können sich LEDs befinden, die dem stehenden Fahrer die Bereitschaft bzw. den Betriebszustand des Fahrzeugs anzeigen (z.B. Gleichgewichtsanzeige) :
- Sensorschnittstelle: Das Fahrzeug kann zwei Fußmatten für den stehenden Fahrer aufweisen. Unterhalb der Fußmatten können sich je zwei Sensoren (Schalter) befinden, die der zweiten Steuerung Informationen darüber verschaffen, ob ein Fahrer auf dem Fahrzeug steht. Besteigt ein Fahrer das nicht umgerüstete Fahrzeug, wird dies der zweiten Steuereinrichtung über die "Fußschalter" signalisiert und die Steuerung geht in einen Balancierbetrieb über. Dass sich die Steuerung sicher in der Gleichgewichtsregelung befindet, kann dem stehenden Fahrer wiederum über die LEDs mitgeteilt werden.

Eine Verbindung der Sensoren und Aktuatoren der Anzeigeschnittstelle und der Sensorschnittstelle erfolgt kabelgebunden.

Der Umrüstsatz hat einen Sitz mit einem Sitzkissen. Unter dem Sitzkissen befindet sich ein beweglich gelagertes Sitzblech. Unter diesem Sitzblech sind zwei Schalter angebracht, die mit der ersten Steuereinrichtung über Drähte verbunden sind.

Zur Erfassung der LEDs der Anzeigeschnittstelle hat der Umrüstsatz vorzugsweise eine Vielzahl von lichtempfindlichen Sensoren, die mit der ersten Steuereinrichtung verbunden sind und über Befestigungsmittel am Fahrzeug angebracht werden können.

Des Weiteren hat der Umrüstsatz vier bi-stabile Magnete, die von der Steuereinrichtung aktiviert werden können, und Befestigungsmittel zur Befestigung der Magnete auf dem Gehäuse des Fahrzeugs, vorzugsweise oberhalb der Fußmatten. Im angebrachten Zustand und bei einer Ansteuerung dieser Magnete durch die erste Steuereinrichtung werden die Fußschalter des Fahrzeugs betätigt.

Anhand der Schnittstellen kann also zwischen den beiden Steuerungen bzw. Steuereinrichtungen kommuniziert werden. Die Anwesenheit eines Fahrers wird nach der Umrüstung durch Betätigung des Sitzbleches erkannt. Die erste Steuereinrichtung betätigt (abhängig vom gewünschten Betriebszustand) die Magnete. Dadurch reagiert die zweite Steuereinrichtung, wie wenn ein Fahrer auf ein nicht umgerüstetes Fahrzeug aufgestiegen, bzw. von diesem abgestiegen wäre. Der aktuelle Betriebszustand wiederum wird von der ersten Steuerung über die lichtempfindlichen Sensoren eingelesen und interpretiert.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste:

- 10: erste Stützeinrichtung
- 11: zweite Stützeinrichtung
- 12: Rückenlehne
- 13: Lenkung
- 14: Sitzfläche
- 15: erstes Rad
- 16: zweites Rad
- 17: Abdeckung
- 18: Fußbereich
- 19: Chassis
- 20: Fahrgestell
- 21: Linearmotor
- 22: Befestigungseinrichtung
- 23: Feder
- 24: Strebe
- 25: Fußteil
- 26: Kontaktschalter
- 27: Gehäuse

## Patentansprüche

1. Stützsystem für einen elektronisch selbstbalancierten Rollstuhl mit mindestens zwei Rädern (15, 16), umfassend:
- mindestens eine erste Stützeinrichtung (10) und mindestens eine zweite Stützeinrichtung (11);
- mindestens einen Linearantrieb, wobei zumindest die erste Stützeinrichtung (10) über den mindestens einen Linearantrieb (21) bewegbar ist, **dadurch gekennzeichnet, dass** ein Sensor zur Bestimmung einer Kontaktierung der ersten Stützeinrichtung (10) mit dem Untergrund vorgesehen ist; und
- eine Steuereinrichtung, insbesondere Mikrocontroller, die (der) ausgebildet ist, derart, dass der Linearantrieb (21) mit Energie versorgt wird bis die Kontaktierung mit dem Boden mittels des Sensors festgestellt wird und die erste Stützeinrichtung (10) nach einer ersten Kontaktierung mit dem Untergrund wieder um einen vorbestimmten Weg zurückbewegt wird.

2. Stützsystem nach Anspruch 1,
**dadurch gekennzeichnet, dass**
der zweiten Stützeinrichtung (11) ein Linearantrieb (21) zugeordnet ist.

3. Stützsystem nach Anspruch 1 oder 2,
**dadurch gekennzeichnet, dass**
ein Gehäuse (27), insbesondere für die Aufnahme der Stützeinrichtung und/oder des Linearantriebs vorgesehen ist und derart beweglich, insbesondere federnd gelagert ist, dass die Kontaktierung mit dem Untergrund zu einer Verlagerung des Gehäuses (27) führt, wobei vorzugsweise ein Kontaktsensor vorgesehen ist zur Bestimmung der Verlagerung des Gehäuses.

4. Stützsystem nach einem der vorhergehenden Ansprüche,
**dadurch gekennzeichnet, dass**
eine Messeinrichtung, insbesondere umfassend ein Potentiometer vorgesehen ist, um eine Relativ-Position der Stützeinrichtung (10, 11) gegenüber einem Fahrgestell (20) des Rollstuhls und/oder dem Untergrund zu bestimmen.

5. Stützsystem nach einem der vorangehenden Ansprüche,
**dadurch gekennzeichnet, dass**
die Steuereinrichtung, insbesondere derMicrocontroller, derart ausgebildet ist, dass der Linearantrieb (21) so betätigt werden kann, dass die Bewegung der Stützeinrichtung (10, 11) erst nach Zurücklegen eines vorbestimmten Weges nach der Kontaktierung zum Stillstand kommt.

6. Stützsystem nach einem der vorangehenden Ansprüche,
**dadurch gekennzeichnet, dass**
die Steuereinrichtung dazu ausgebildet ist, die Kontaktierung der Stützeinrichtung (10, 11) mit dem Untergrund zu erfassen und ein (aktives) Bremsen der Stützeinrichtung, insbesondere unter Nutzung des/eines Linearantriebs (21), zu initialisieren.

7. Elektronisch selbstbalancierter Rollstuhl, umfassend ein Stützsystem nach einem der vorangehenden Ansprüche.

8. Rollstuhl nach Anspruch 7,
**dadurch gekennzeichnet, dass**
die Stützeinrichtungen (10, 11) vorzugsweise an einer Seite vorgesehen sind oder eine erste Stützeinrichtung (10, 11) an einer ersten Seite und eine zweite Stützeinrichtung (10, 11) an einer zweiten Seite, insbesondere diagonal gegenüberliegend, angeordnet ist.

9. Rollstuhl nach Anspruch 7 oder 8,
**dadurch gekennzeichnet, dass**
eine erste Steuerungseinrichtung, z. B. Microcontroller, zur Steuerung zumindest der ersten Stützeinrichtung und eine zweite Steuerungseinrichtung, z. B. Microcontroller, zur Steuerung von Fahrmanövern vorgesehen ist,
wobei die erste Steuerungseinrichtung vorzugsweise mit der zweiten Steuerungseinrichtung über zumindest ein Paar von einem Aktuator und einem Sensor kommuniziert.

10. Rollstuhl nach einem der Ansprüche 7 bis 9,
**dadurch gekennzeichnet, dass**
eine Fahrt-Messeinrichtung vorgesehen ist zur Bestimmung, ob der Rollstuhl fährt, wobei die Fahrt-Messeinrichtung vorzugsweise eine Lochscheibe und/oder einen Hallsensor umfasst und mit einer/der ersten Steuerungseinrichtung verbunden ist.

11. Rollstuhl nach einem der Ansprüche 7 bis 10,
**dadurch gekennzeichnet, dass**
eine Geländeneigungs-Messeinrichtung vorgesehen ist, um eine Geländeneigung, z. B. am Berg, festzustellen.

12. Rollstuhl nach einem der Ansprüche 7 bis 11,
**gekennzeichnet durch**
mindestens einen, vorzugsweise in einen Sitz integrierten, Fahrererkennungssensor, der kommunikativ mit der ersten Steuerungseinrichtung verbunden ist.

13. Verfahren zum Steuern eines Stützsystems eines selbstbalancierten Rollstuhls nach einem der Ansprüche 7 bis 12,
**gekennzeichnet durch** die Schritte:
- Antreiben der ersten Stützeinrichtung (10, 11) über einen Linearantrieb (21); und
- Feststellen der Kontaktierung der Stützeinrichtung (10, 11) mit dem Untergrund durch den Sensor;
- Ausschalten des Linearantriebs (21) nach dem Feststellen der Kontaktierung mit dem Untergrund;
- Anheben der ersten Stützeinrichtung (10) nach einer ersten Kontaktierung.

14. Verfahren nach Anspruch 13,
**dadurch gekennzeichnet, dass**
nach dem Feststellen der Kontaktierung mit dem Untergrund der Linearantrieb (21) aktiv gebremst wird.

15. Verfahren nach einem der Ansprüche 13 bis 14,
**dadurch gekennzeichnet, dass**
die Stützeinrichtung (10, 11), insbesondere nach dem Anheben derart in Richtung Untergrund bewegt wird, dass sie nach der Kontaktierung noch um eine vorbestimmte Strecke weiterbewegt wird.

16. Verfahren nach einem der Ansprüche 13 bis 15,
**dadurch gekennzeichnet, dass**
eine Position der Stützeinrichtung (10, 11) bei Feststellung einer Kontaktierung mit dem Untergrund abgespeichert wird und/oder **dadurch gekennzeichnet, dass**
eine Position der Stützeinrichtung gemessen wird, insbesondere über ein Potentiometer.

17. Umrüstsatz für einen Rollstuhl, vorzugsweise für einen Rollstuhl nach einem der Ansprüche 7 bis 12, insbesondere nach einem der Ansprüche 9 bis 12,
**gekennzeichnet durch**:
- ein Stützsystem nach einem der Ansprüche 1 bis 6,
- und mindestens einen Aktuator, wobei die erste Steuereinrichtung vorzugsweise so ausgebildet ist, dass sie über den Aktuator des Umrüstsatzes und einen korrespondierenden Sensor eines selbstbalancierten Fahrzeugs mit einer am selbstbalancierten Fahrzeug vorgesehenen zweiten Steuerungseinrichtung, insbesondere zur Durchführung von Fahrmanövern und/oder zum Aktivieren und/oder Deaktivieren unterschiedlicher Modi des selbstbalancierten Fahrzeugs kommunizieren kann.

## Claims

1. A support system for an electronically self-balanced wheelchair having at least two wheels (15, 16), comprising:
- at least one first support device (10) and at least one second support device (11);
- at least one linear drive, wherein at least the first support device (10) is movable via the at least one linear drive (21), **characterized in that** a sensor is provided for determining a contacting of the first support device (10) with the underground; and
- a control device, in particular a microcontroller, which is configured such that the linear drive (21) is supplied with power until the contacting with the floor is detected by means of the sensor, and, after a first contacting with the underground, the first support device (10) is moved back again by a predetermined distance.

2. The support system according to claim 1,
**characterized in that**
a linear drive (21) is assigned to the second support device (11).

3. The support system according to claim 1 or 2,
**characterized in that**
a housing (27), in particular for accommodating the support device and/or the linear drive is provided and mounted to be movable, in particular spring-mounted, such that the contacting with the underground results in a displacement of the housing (27), wherein a contact sensor is preferably provided for determining the displacement of the housing.

4. The support system according to anyone of the preceding claims,
**characterized in that**
a measurement device, in particular comprising a potentiometer, is provided in order to determine a relative position of the support device (10, 11) with respect to a carriage (20) of the wheelchair and/or the underground.

5. The support system according to anyone of the preceding claims,
**characterized in that**
the control device, in particular the microcontroller, is configured such that the linear drive (21) can be actuated so that the movement of the support device (10, 11) stops only after a predetermined distance after the contacting has been covered.

6. The support system according to anyone of the preceding claims,
**characterized in that**
the control device is configured to detect the contacting of the support device (10, 11) with the underground and to initialize an (active) braking of the support device, in particular by using the/a linear drive (21).

7. An electronically self-balanced wheelchair comprising a support system according to anyone of the preceding claims.

8. The wheelchair according to claim 7,
**characterized in that**
the support devices (10, 11) preferably are provided on one side, or a first support device (10, 11) is provided on a first side, and a second support device (10, 11) is provided on a second side, in particular being diagonally opposite.

9. The wheelchair according to claim 7 or 8,
**characterized in that**
a first control device, e.g. a microcontroller, is provided for controlling at least he first support device, and a second control device, e.g. a microcontroller, is provided for controlling driving manoeuvres,
wherein the first control device communicates preferably with the second control device via at least one pair of an actuator and a sensor.

10. The wheelchair according to anyone of claims 7 to 9,
**characterized in that**
a traveling measurement device is provided for determining whether the wheelchair is running, wherein the traveling measurement device preferably comprises a perforated disk and/or a Hall sensor and is connected to a/the first control device.

11. The wheelchair according to anyone of claims 7 to 10,
**characterized in that**
a terrain slope measurement device is provided in order to detect a terrain slope, e.g. on a hill.

12. The wheelchair according to anyone of claims 7 to 11,
**characterized by**
at least one, preferably seat-integrated driver recognition sensor which is communicatively connected to the control device.

13. A method for controlling a support system of a self-balanced wheelchair according to anyone of claims 7 to 12,
**characterized by** the steps of:
- driving the first support device (10, 11) via a linear drive (21); and
- detecting the contacting of the support device (10, 11) with the underground by means of the sensor;
- switching off the linear drive (21) after the contacting with the underground has been detected;
- lifting the first support device (10) after a first contacting.

14. The method according to claim 13,
**characterized in that**
after the detection of the contacting with the underground, the linear drive (21) is actively decelerated.

15. The method according to anyone of claims 13 to 14,
**characterized in that**,
the support device (10, 11), in particular after being lifted, is moved toward the underground such that it keeps on moving by a predetermined distance after the contacting.

16. The method according to anyone of claims 13 to 15,
**characterized in that**,
when a contacting with the underground is detected, a position of the support device (10, 11) is stored, and/or
**characterized in that**
a position of the support device is measured, in particular via a potentiometer.

17. A retrofit kit for a wheelchair, preferably for a wheelchair according to anyone of claims 7 to 12, in particular according to anyone of claims 9 to 12,
**characterized by**:
- a support system according to anyone of claims 1 to 6,
- and at least one actuator, wherein the first control device preferably is configured so as to be able to communicate via the actuator of the retrofit kit and a corresponding sensor of a self-balanced vehicle with a second control device provided on the self-balanced vehicle, in particular for performing driving maneouvres and/or for activating and/or deactivating different modes of the self-balance vehicle.

## Revendications

1. Système d'appui pour un fauteuil roulant à auto-équilibrage électronique doté d'au moins deux roues (15, 16), comprenant :
- au moins un premier dispositif d'appui (10) et au moins un deuxième dispositif d'appui (11) ;
- au moins un entraînement linéaire, sachant qu'au moins le premier dispositif d'appui (10) est mobile via l'au moins un entraînement linéaire (21), **caractérisé en ce qu'**un capteur est prévu pour déterminer un contact du premier dispositif d'appui (10) avec le sol ; et
- un dispositif de commande, en particulier un microcontrôleur, qui est constitué de telle façon que l'entraînement linéaire (21) soit alimenté en énergie jusqu'à ce que le contact avec le sol soit constaté au moyen du capteur et le premier dispositif d'appui (10) soit de nouveau déplacé vers l'arrière à raison d'une course prédéterminée après un premier contact avec le sol.

2. Système d'appui selon la revendication 1,
**caractérisé en ce que**
un entraînement linéaire (21) est associé au deuxième dispositif d'appui (11).

3. Système d'appui selon la revendication 1 ou 2,
**caractérisé en ce que**
un boîtier (27) est prévu, en particulier pour le logement du dispositif d'appui et/ou de l'entraînement linéaire, et est mobile, en particulier logé de manière élastique, de telle façon que le contact avec le sol entraîne un déport du boîtier (27), sachant que de préférence un capteur de contact est prévu pour déterminer le déport du boîtier.

4. Système d'appui selon l'une des revendications précédentes,
**caractérisé en ce que**
un dispositif de mesure, en particulier comprenant un potentiomètre, est prévu pour déterminer une position relative du dispositif d'appui (10, 11) par rapport à un châssis (20) du fauteuil roulant et/ou au sol.

5. Système d'appui selon l'une des revendications précédentes,
**caractérisé en ce que**
le dispositif de commande, en particulier le microcontrôleur, est constitué de telle façon que l'entraînement linéaire (21) puisse être actionné de telle sorte que le mouvement du dispositif d'appui (10, 11) ne s'arrête qu'après qu'une course prédéterminée a été parcourue après le contact.

6. Système d'appui selon l'une des revendications précédentes,
**caractérisé en ce que**
le dispositif de commande est constitué pour saisir le contact du dispositif d'appui (10, 11) avec le sol et initialiser un freinage (actif) du dispositif d'appui, en particulier moyennant le/un entraînement linéaire (21).

7. Fauteuil roulant à auto-équilibrage électronique, comprenant un système d'appui selon l'une des revendications précédentes.

8. Fauteuil roulant selon la revendication 7,
**caractérisé en ce que**
les dispositifs d'appui (10, 11) sont prévus de préférence d'un côté ou un premier dispositif d'appui (10, 11) est prévu d'un premier côté et un deuxième dispositif d'appui (10, 11) est prévu d'un deuxième côté, en particulier de façon diagonalement opposée.

9. Fauteuil roulant selon la revendication 7 ou 8,
**caractérisé en ce que**
un premier dispositif de commande, p. ex. un microcontrôleur, est prévu pour commander au moins le premier dispositif d'appui et un deuxième dispositif de commande, p. ex. un microcontrôleur, est prévu pour commander des manoeuvres de déplacement,
sachant que le premier dispositif de commande communique de préférence avec le deuxième dispositif de commande via au moins une paire d'un actionneur et d'un capteur.

10. Fauteuil roulant selon l'une des revendications 7 à 9,
**caractérisé en ce que**
un dispositif de mesure de déplacement est prévu pour déterminer si le fauteuil roulant se déplace, sachant que le dispositif de mesure de déplacement comprend de préférence un disque perforé et/ou un capteur de Hall et est relié à un/au premier dispositif de commande.

11. Fauteuil roulant selon l'une des revendications 7 à 10,
**caractérisé en ce que**
un dispositif de mesure d'inclinaison de terrain est prévu pour constater une inclinaison de terrain, p. ex. en côte.

12. Fauteuil roulant selon l'une des revendications 7 à 11,
**caractérisé par**
au moins un capteur de détection de conducteur, de préférence intégré à un siège, qui est relié en termes de communication au premier dispositif de commande.

13. Procédé de commande d'un système d'appui d'un fauteuil roulant à auto-équilibrage selon l'une des revendications 7 à 12,
**caractérisé par** les étapes :
- entraînement du premier dispositif de commande (10, 11) via un entraînement linéaire (21) ; et
- constatation du contact du dispositif d'appui (10, 11) avec le sol par le capteur ;
- coupure de l'entraînement linéaire (21) après la constatation du contact avec le sol ;
- soulèvement du premier dispositif d'appui (10) après le premier contact.

14. Procédé selon la revendication 13,
**caractérisé en ce que**
après la constatation du contact avec le sol, l'entraînement linéaire (21) est freiné activement.

15. Procédé selon l'une des revendications 13 à 14,
**caractérisé en ce que**
le dispositif d'appui (10, 11), en particulier après le soulèvement, est déplacé vers le sol de telle façon qu'il continue de se déplacer à raison d'une course prédéterminée après le contact.

16. Procédé selon l'une des revendications 13 à 15,
**caractérisé en ce que**
une position du dispositif d'appui (10, 11) est enregistrée en cas de constatation d'un contact avec le sol et/ou
**caractérisé en ce que**
une position du dispositif d'appui est mesurée, en particulier via un potentiomètre.

17. Kit de conversion pour un fauteuil roulant, de préférence un fauteuil roulant selon l'une des revendications 7 à 12, en particulier selon l'une des revendications 9 à 12,
**caractérisé par**:
- un système d'appui selon l'une des revendications 1 à 6,
- et au moins un actionneur, sachant que le premier dispositif de commande est de préférence constitué de sorte à pouvoir communiquer, via l'actionneur du kit de conversion et un capteur correspondant d'un véhicule à auto-équilibrage, avec un deuxième dispositif de commande prévu sur le véhicule à auto-équilibrage, en particulier pour exécuter des manoeuvres de déplacement et/ou pour activer et/ou désactiver divers modes du véhicule à auto-équilibrage.
